(19) Europäisches Patentamt
European Patent Office
Office européen des brevets

(11) **EP 2 416 578 A2**

(12) **EUROPEAN PATENT APPLICATION**

(43) Date of publication:
08.02.2012  Bulletin 2012/06

(51) Int Cl.:
*H04N 13/00* (2006.01)  *H04N 13/02* (2006.01)
*G06T 7/00* (2006.01)

(21) Application number: 11176194.6

(22) Date of filing: 01.08.2011

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.08.2010 US 369861 P**

(71) Applicant: **Trdimize Ltd**
**62487 Tel Aviv (IL)**

(72) Inventor: **Campbell, Daniel**
**20115 Israel (IL)**

(74) Representative: **Ahmad, Sheikh Shakeel et al**
**Keltie LLP**
**Fleet Place House**
**2 Fleet Place**
**London EC4M 7ET (GB)**

(54) **Multiclass clustering with side information from multiple sources and the application of converting 2d video to 3d**

(57)     A method of converting two-dimensional video data to three-dimensional video data. The method includes receiving at least one frame of two-dimensional video data and receiving side information of image elements in the at least one frame of the two-dimensional video data. The method also includes data clustering the two-dimensional video data with the side information to create a layered side map and side image based rendering using the two-dimensional video data and the layered side map to create three-dimensional video data for stereoscopic video.

Fig. 1

## Description

### FIELD OF THE INVENTION

The present invention generally relates generally to converting 2D video to 3D video, and more particularly to 2D to 3D video conversion by means of multiclass clustering with side information from multiple sources

### BACKGROUND OF THE INVENTION

The text that follows provides examples of "data clustering with side information," a.k.a. semi-supervised clustering, semi-supervised segmentation, semi-supervised categorization, semi-supervised training or semi-supervised learning. This approach includes data clustering as a special case where the side information is empty. Although there are many methods dealing with this form of approach, there is a continuing need for improvement.

Converting 2-dimensional (2D) video into 3-dimensional (3D) video is of wide and increasing interest. Different methods have been devised to provide such conversion. Some are fully-automatic, i.e., without user intervention and some are semi-automatic, where a user guides or corrects an automatic conversion process. Yet current methods, including both fully-automatic and semi-automatic methods, are limited in the quality of the conversion outcome. When high quality conversion is desired the method of choice is still fully-manual, where the user dictates the side information relative to each pixel or each small semi-uniform region. Typical methods to deal with 2D to 3D video conversion are shown, for example, in the following patents:

U.S. 5,510,832 Synthesized stereoscopic imaging system and method, by Garcia;
5,673,081 Method of converting two-dimensional images into three-dimensional images, by Yamashita et al;
U.S. 5,739,844 Method of converting two-dimensional image into three-dimensional image, by Kuwano et al; and
U.S. 6,445,833 Device and method for converting two-dimensional video into three-dimensional video, by Murata et al.

Note also this reference: [1] Stella X. Yu and Jianbo Shi. Multiclass spectral clustering. In ICCV'03: Proceedings of the Ninth IEEE International Conference on Computer Vision, page 313, 2003.

Thus, it would be advantageous to provide an improved method for converting 2D video into 3D video by means of data clustering with side information.

### SUMMARY OF THE INVENTION

A method is disclosed for converting two-dimensional video data to three-dimensional video data. The method includes receiving at least one frame of two-dimensional video data and receiving side information of image elements in the at least one frame of the two-dimensional video data. The method also includes data clustering the two-dimensional video data with the side information to create a layered side map and side image based rendering using the two-dimensional video data and the layered side map to create three-dimensional video data for stereoscopic video.

A system is disclosed for converting two-dimensional video data to three-dimensional video data. The system includes means for receiving at least one frame of two-dimensional video data and means for receiving side information of image elements in the at least one frame of the two-dimensional video data. The system also includes means for data clustering the two-dimensional video data with the side information to create a layered side map and means for side image based rendering using the two-dimensional video data and the layered side map to create three-dimensional video data for stereoscopic video.

The present invention provides a unique method for data clustering, which accounts for side information from single or multiple sources. Two settings are provided. In the first setting side information is given as hard constraints, where each of a list of data-points is assigned to a specific cluster. In the second setting soft constraints are provided for a list of data-points, but each data-point is followed by a suggestion for cluster assignment together with a confidence factor for this assignment. In the second setting, using soft constraints, various inputs of side information from multiple sources may contradict each other, meaning that different sources may have different suggestions for assigning the same data-point, with different confidence levels. Hard constraints are in the form of software algorithm requirements, such as for boundary conditions, for example to define exactly the boundary between picture elements. Soft constraints are more in the form of suggestions. Squiggles, for example, are generally considered soft information.

The present invention provides a generalization of many data clustering methods that include a discretization stage, such as that provided by Yu and Shi [1], to account for side-information. In one aspect of the present invention the discretization stage is modified to enforce the side-information constraints in the hard settings, while simultaneously accounting for the side information constraints in the soft settings.

Another aspect of the present invention provides for data clustering with side information, including, but not limited to the methods described herein, as a tool for converting 2D video into 3D video. Here, side information is in the form of groups of pixels that belongs to the same side layer, or as two or more groups of pixels that belong to a different side layer. An additional step is required in which the user assigns an approximate side information value to each cluster. This sparse side information can be provided by one or more users and/or by automatic tools that process the 2-dimensional video sequence and guess the side value of some of the pixels in some of the frames. Thus, the data clustering with side information schemes described herein can be used for improved conversion of 2D video into 3D video.

In describing the present invention the following conventions are used:

Matrices are in capital letters (e.g. $M$). $M^T$ is the transpose of the matrix $M$. $M_{id}$ denotes the element in the ith row and jth column of $M$. Column vectors are in bold lower-case letters. (e.g. v). 1 is a column vector of the appropriate length with all elements equals to one. $I$ is the unit matrix of the appropriate size, meaning that it is a square matrix with all diagonal elements equal to one, and all off-diagonal elements equal zero.

o is an element-wise multiplication between two matrices: Let $A$, $B$ be two matrices of the same size, then $C = A$ o $B$ another matrix of the same size, and $C_{i,j} = A_{i,j} | B_{i,j}$.

Assume there are n data-points to be clustered into k clusters. The input for the clustering problem is a similarity matrix, $A \in R^{n \times n}$. $A_{i,j}$ holds the similarity between the ith data-point and the jth data-point. For example, if the data points are the columns of a matrix $X$, then one common similarity matrix is $A = X^T X$ Another common example provides a similarity matrix A, wherein a distance or difference measure is given between the *ith* and *jth* data points. $D_{i,j}$ is to set the values in A such that $A_{i,j} = \exp(-(D_{i,j})^2/\sigma^2)$, where $\sigma$ is a scale parameter.

There has thus been outlined, rather broadly, the more important features of the invention in order that the detailed description thereof that follows hereinafter may be better understood. Additional details and advantages of the invention will be set forth in the detailed description, and in part will be appreciated from the description, or may be learned by practice of the invention.

**BRIEF DESCRIPTION OF THE DRAWINGS**

For a better understanding of the invention with regard to the embodiments thereof, reference is now made to the accompanying drawing, in which like numerals designate corresponding elements or sections throughout, and in which:

Fig. 1 is a schematic illustration of an exemplary embodiment built around a multiclass clustering algorithm for two-dimensional to three-dimensional video conversion, constructed in accordance with the principles of a preferred embodiment of the present invention; and

Fig. 2 is a schematic illustration of an exemplary embodiment showing the man-machine interaction for two-dimensional to three-dimensional video conversion, constructed in accordance with the principles of a preferred embodiment of the present invention.

**DETAILED DESCRIPTION OF AN EXEMPLARY EMBODIMENT**

The principles and operation of a method and an apparatus according to the present invention may be better understood with reference to the drawings and the accompanying description, it being understood that these drawings are given for illustrative purposes only and are not meant to be limiting.

General

One starts with an overview of a commonly used discretization stage, which is the final step in many popular clustering schemes that do not account for side information of any type, including Yu and Shi [l]. This discretization method is then extended to account for different versions of side information, therefore allowing any clustering scheme that uses such a discretization stage to account for side information. The discretization stage takes a non-discrete solution, such as the leading k non-trivial eigenvectors of the input matrix A in the case of Yu and Shi [l], and seeks the nearest valid solution to G:

$$\min_{G,R} \quad \|G - \tilde{G}R\|^2 \quad s.t. \quad G \in \{0,1\}^{n \times k}, \ G\mathbf{1} = \mathbf{1}, \ R^T R = I, \tag{1}$$

and the G for which the term is minimized is the desired discrete solution. This is solved approximately by repeatedly following two steps until convergence:

● 1. Solving for G using the current estimates for R, where R is any real number,

$$\min_{G} \quad \|G - \tilde{G}R\|^2 \quad s.t. \quad G \in \{0,1\}^{n \times k}, \; G\mathbf{1} = \mathbf{1}. \tag{2}$$

$G_{j,l}$ is set to one if $l = argmax_i \cdot gmax_l (\overline{G}R)$ otherwise set to zero

● 2. Solving for R using the current value of G,

$$\min_{R} \quad \|G - \tilde{G}R\|^2 \quad s.t. \quad R^T R = I. \tag{3}$$

The solution is found through singular value decomposition (SVD).

In linear algebra, SVD is a factorization of a real or complex matrix, with many useful applications in signal processing and statistics. Formally, the singular value decomposition of an $M \times N$ real or complex matrix M is a factorization of the form

$$M = U\Sigma V^*,$$

where $U$ is an $M \times M$ real or complex unitary matrix, $\Sigma$ is an $M \times N$ diagonal matrix with nonnegative real numbers on the diagonal, and $V^*$ (the conjugate transpose of V) is an $N \times N$ real or complex unitary matrix. The diagonal entries $\Sigma_{i,i}$ of $\Sigma$ are known as the singular values of $M$. The m columns of $U$ and the n columns of $V$ are called the left singular vectors and right singular vectors of $M$, respectively.

Next, the discretization method is changed to account for side information.

Hard Constraints

The hard constraints are given in a list. Let $H \subset \{1,..., n\}$ be the group of indexes of data-points that has corresponding constraints. For each $j \in H$, let $I_j$ be the index of the cluster to which the jth data-point must be assigned.

In order to account for hard constraints, we add the constraints to eq. 1 and obtain,

$$G,R \qquad \|G - GR\|^2 \tag{4}$$
$$s.t. \; G \in \{0,1\}^{n k}, \; G1 = 1, \; R^T R \; I,$$
$$V \; j_E R \; Gj,i, \; = 1, \; Gj,i, \neq 0$$

*Solve by the following algorithm:*

*Algorithm 1: Solving for R (eq. 3) does not change at all,* as *there are no constraints on R. Solving for G is different,* as *eq. 2 does change and becomes:*

$$\min \quad \|G - GR\|^2 \qquad (5)$$
$$s.t. \; G \; \varepsilon \; {0,1}^{n \times k} \; ,$$
$$G1 \quad = \quad 1,$$
$$\forall j_E H \quad G_{jj,} \quad = \quad 1,$$
$$G_{j,} l \neq l, \; = \; 0$$

For rows corresponding to data points without constraints (j $\notin$ H) solution done same way as for eq. 2. For rows that correspond to constraints data-points (j ε H), solution according to constraint. Thus, $G_{j,l}$ is 1 if j ε H and I = $I_{lr}$ if j $\notin$ H and I = argmax$_i$ (G R) $_{j,l}$ Else, $G_{j,l}$ set to 0.

Soft Constraints Assume m sources for side information. Side information from ith
*For rows corresponding to data-points without constraints (j $\notin$ H) the solution is done the same way as for eq. 2. For rows that correspond to constraints data points (j $\in$ H), the solution is according to the constraint. Meaning that $G_{j,l}$ is one if j $\in$ H and I = $I_j$, or if j $\notin$ H and I = argmax$_i$ $(\overline{G}R)_{j;l}$ . Otherwise, $G_{j,l}$ is set to zero.*

## 3.4 Soft Constraints

Assume we have *m* sources for side information. The side information coming from the ith source is specified by two matrices:

- $\hat{G}^i \in \{0,1\}^{n \times k}$ , an indicator matrix for cluster assignment: The jth row of $\hat{G}^i$ is holding the suggestion for cluster assignment of the *j*th data-point by the ith source, where each row holds a single 1 value in the column corresponding to the cluster that the data-point has to be assigned to, and zeros elsewhere. For example, a row of 0, 1,0,0, ...,0 means that the ith source suggests assigning this data-point to the second cluster.
- $c^i \in R^k$, a vector that holds the confidence levels: The jth entry is the confidence associated with the suggestion for the cluster assignment of the *j*th data-point by the ith source.
- If a source has no suggestion for the *j*th data-point, then we set both the jth row of $\hat{G}^i$ and the jth entry in $c^i$ to zeros. In order to account for soft constraints, we add the constraints to eq. 1 and obtain,

$$\min_{G,R} \quad \|G - \tilde{G}R\|^2 + \sum_{i=1}^{m} \| \left( \mathbf{c}^i \mathbf{1}^T \right) \circ \left( G - \hat{G}^i \right) \|^2 \qquad (6)$$
$$s.t. \qquad G \in \{0,1\}^{n \times k} , \; G1 = 1, \; R^T R = I$$

The solution is approximated by the following algorithm:
Algorithm 2: Solving for R (eq. 3) does not change, as there are no additional terms in R. Solving for G is different, as eq. 2 does change and becomes:

$$\min_{G} \quad \|G - \tilde{G}R\|^2 + \sum_{i=1}^{m} \| \left( \mathbf{c}^i \mathbf{1}^T \right) \circ \left( G - \hat{G}^i \right) \|^2 \qquad (7)$$
$$s.t. \qquad G \in \{0,1\}^{n \times k} , \; G1 = 1,$$

Solution given by $G_{i,l}$ is 1 if I = argmax$_l$, $\left( \tilde{G}R + \sum_{i=1}^{m} \left( \mathbf{c}^i \mathbf{1}^T \right) \circ \hat{G}^i \right)_{j,l}$. Otherwise, $G_{i,l}$ is set to 0.

The present invention provides methods for 2D-to-3D conversion for multi-view displays. Objects having large side information differences are first segmented by semi-automatic tools. Appropriate side values are assigned to these objects and the missing image pixels in the background are interpolated by in-painting techniques, so that different views of the image can be synthesized. This shortens the process of 2D-to-3D conversion and its performance is satisfactory for images and short video clips.

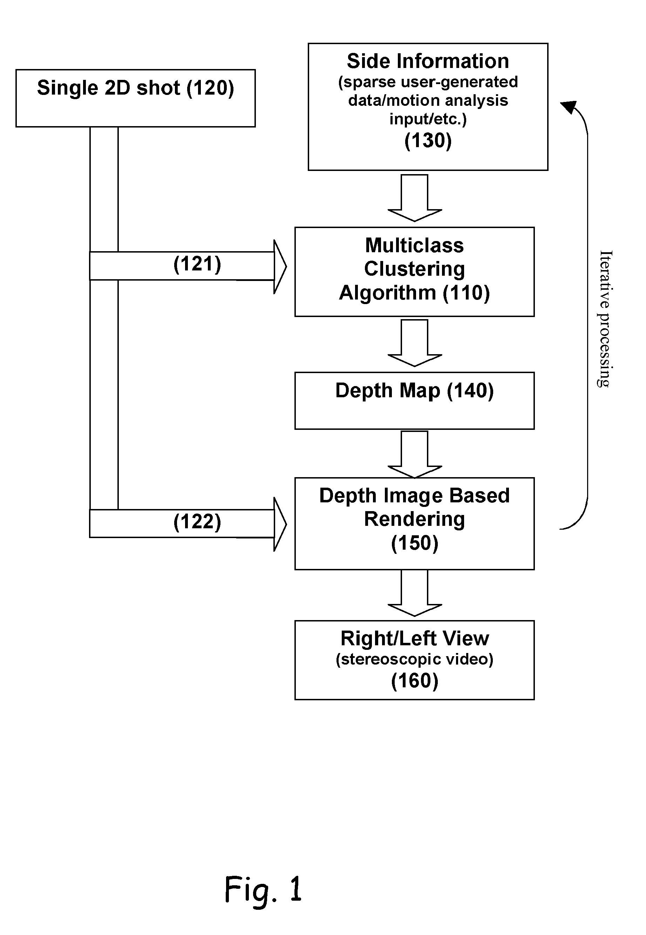

Fig. 1 is a schematic illustration of an exemplary embodiment built around a multiclass clustering algorithm (MCA) 110 for two-dimensional to three-dimensional video conversion, constructed in accordance with the principles of a preferred embodiment of the present invention. Two settings are provided. In the first setting side information 121 is given as hard constraints, where each of a list of data-points is assigned to a specific cluster. Any Windows-based PC, Mac or Linux-based PC can run this algorithm

As input, multiclass clustering algorithm 110 receives a frame, a single 2D shot 120 and associated side information 130. One aspect of the present invention provides for data clustering with side information, including, but not limited to the methods described herein, as a tool for converting 2D video into 3D video. Here, side information is in the form of groups of pixels that belongs to the same side layer, or as two or more groups of pixels that belong to a different side layer. An additional step is required in which the user assigns an approximate side information value to each cluster. This sparse side information can be provided by one or more users and/or by automatic tools that process the 2-dimensional video sequence and guess the side value of some of the pixels in some of the frames.

User input, for example, can be in the form of user drawn squiggles on a small number of selected frames from the video sequence, where the user assigns side information to each squiggle. Data clustering, with or without side information, segments the video sequence into layers of different side information. After reviewing the resulting 3D video, the user may correct the side information.

In another exemplary embodiment an automatic process groups pixels having the same side based on low-level visual observation, such as motion analysis. Pixels which are grouped together by the automatic process with high certainty are used as side-information. This automatically produced data can be used alone, or together with user manually produced side information. Specifically, the data clustering with side information schemes described in the present invention can be used for converting 2D video into 3D video. In this case the side information is sparse information about the approximate side of some pixels in some frames.

Multiclass clustering algorithm 110 provides a depth map 140 as output. Depth map 140 can also be used with single 2D shot 120 in a known manner. In the second setting soft constraints are provided for a list of data-points, but each data-point is followed by a suggestion for cluster assignment together with a confidence factor for this assignment. In the second setting 122, using soft constraints, various inputs of side information from multiple sources may contradict each other, meaning that different sources may have different suggestions for assigning the same data-point, with different confidence levels. In another aspect of the present invention the discretization stage is modified to enforce the side-information constraints in the hard settings, while simultaneously accounting for the side information constraints in the soft settings.

E.g., Depth Image Based Rendering (DIBR) 150 is used to generate a right/left view for stereoscopic video 160. DBIR is a type of rendering that generates the necessary views for stereoscopic 3D video. A new camera viewpoint, e.g., left/right eye view, is generated using information from the original source image and its corresponding side map. The new images then can be used for 3D imaging display devices. Each of the above clustering schemes will produce a dense depth map for the entire video. In this case, an example for multiple sources is multiple users processing the same video sequence. In this example, different confidence levels are assigned to the user inputs based on user expertise and past performance.

Examples of the DIBR technique are disclosed, for example, in articles K. T. Kim, M. Siegel, & J. Y. Son, "Synthesis of a high-resolution 3D stereoscopic image pair from a high-resolution monoscopic image and a low-resolution side map," Proceedings of the SPIE: Stereoscopic Displays and Applications IX, Vol. 3295A, pp. 76-86, San Jose, Calif., U.S.A., 1998; and J. Flack, P. Harman, & S. Fox, "Low bandwidth stereoscopic image encoding and transmission," Proceedings of the SPIE: Stereoscopic Displays and Virtual Reality Systems X, Vol. 5006, pp. 206-214, Santa Clara, Calif., USA, January 2003; L. Zhang & W. J. Tam, "Stereoscopic image generation based on side images for 3D TV," IEEE Transactions on Broadcasting, Vol. 51, pp. 191-199, 2005.

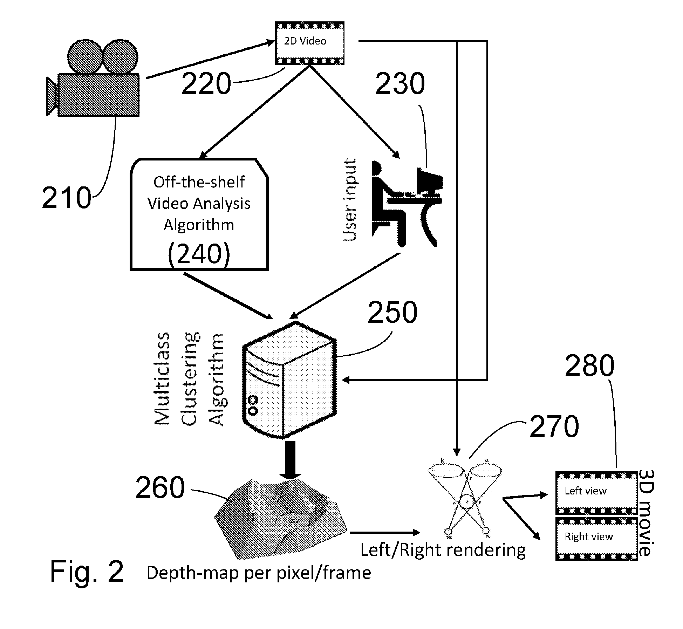

Fig. 2 is a schematic illustration of an exemplary embodiment showing the man-machine interaction for two-dimensional to three-dimensional video conversion, constructed in accordance with the principles of a preferred embodiment of the present invention. A standard video camera 210 produces or has produced a normal 2D video. Any digital camera, video or still, can be used, for example a RED high-end digital video camera for movies. A user, preferably with the aid of a computer terminal 230 mainframe, smartphone, or even manually, introduces manual side information relevant to the 2D video 220. This manual side information is in the form of color-coded squiggles. Each squiggle relates to one or more frames of the 2D video 220. The color-coded squiggles, when applied to their respective frames of the 2D video 220, represent an assignment of side values to groups of pixels. Side values reference groups of pixel data corresponding to the same distance from the camera with a field of view made up of such groups at a variety of distances.

2D video 220 is also analyzed by an off-the-shelf algorithm 240. A few examples are: (1) color based segmentation / clustering, (2) motion based segmentation / clustering, and (3) texture based segmentation / clustering.

2D video 220 and the results of processing in computer terminal 230 and by algorithm 240 are processed in a server according to a multiclass clustering algorithm (MCA) 250. Again the server can be any Windows-based PC or Linux-based PC.

The result of MCA processing is a side-map per pixel/frame 260, which in turn provides left/right rendering 270 to provide left and right views for a fully converted 2D to 3D movie 280.

Having described the invention with regard to certain specific embodiments thereof, it is to be understood that the description is not meant as a limitation, since further embodiments and modifications will now become apparent to those skilled in the art, and it is intended to cover such modifications as fall within the scope of the appended claims.

**Claims**

1. A method of converting two-dimensional video data to three-dimensional video data, the method comprising:

    receiving at least one frame of two-dimensional video data;
    receiving associated side information of image elements in the at least one frame of the two-dimensional video data;
    data clustering the two-dimensional video data with the side information to create a layered side map; and
    depth image based rendering (DIBR) using the two-dimensional video data and the layered side map to create three-dimensional video data for stereoscopic video.

2. The method of claim 1, further comprising data clustering the two-dimensional video data with motion analysis information as well as the side information to create the layered side map.

3. The method of claim 2, wherein the side map is used with the at least one 2D frame by means of DIBR to generate a right/left view for stereoscopic video

4. The method of claim 2, wherein the side information is soft constraint.

5. The method of claim 4, wherein the solution is found through singular value decomposition (SVD).

6. The method of claim 2, wherein the side information is hard constraint.

7. The method of claim 6, wherein the solution is found through singular value decomposition (SVD).

8. The method of claim 1, further comprising correcting the side information or correcting assignment of side after viewing preliminary or full results of the conversion to 3D, and using the new input to correct the 3D conversion, in a process that repeats again and again until the desired 3D result is obtained.

9. A system for converting two-dimensional video data to three-dimensional video data, the system comprising:

    means for receiving at least one frame of two-dimensional video data;
    means for receiving side information of image elements in the at least one frame of the two-dimensional video data;
    means for data clustering the two-dimensional video data with the side information to create a layered side map; and
    means for side image based rendering using the two-dimensional video data and the layered side map to create three-dimensional video data for stereoscopic video.

10. The system of claim 9 wherein the side information is provided by at least one user.

11. The system of claim 9 wherein the side information is provided by automatic tools that analyze the 2D movie.

12. The system of claim 9 wherein the side information is provided both by at least one user and automatically.

13. The system of claim 9 wherein the side information is provided by at least one user, and further comprising means for the at least one user to assign side to each segment of the at least one frame after the clustering step.

14. The system of claim 9 wherein the at least one user assigns side to some pixels or group of pixels together with the side information.

15. The system of claim 9 further comprising means for correcting the side information or the assignment of side after viewing preliminary or full results of the conversion to 3D, and means for using the new input to correct the 3D conversion, in a process that repeats again and again until the desired 3D result is obtained.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5510832 A
- US 5673081 A
- US 5739844 A
- US 6445833 B

**Non-patent literature cited in the description**

- **STELLA X. YU ; JIANBO SHI.** Multiclass spectral clustering. *ICCV'03: Proceedings of the Ninth IEEE International Conference on Computer Vision,* 2003, 313
- **K. T. KIM ; M. SIEGEL ; J. Y. SON.** Synthesis of a high-resolution 3D stereoscopic image pair from a high-resolution monoscopic image and a low-resolution side map. *Proceedings of the SPIE: Stereoscopic Displays and Applications IX,* 1998, vol. 3295A, 76-86
- **J. FLACK ; P. HARMAN ; S. FOX.** Low bandwidth stereoscopic image encoding and transmission. *Proceedings of the SPIE: Stereoscopic Displays and Virtual Reality Systems X,* January 2003, vol. 5006, 206-214
- **L. ZHANG ; W. J. TAM.** Stereoscopic image generation based on side images for 3D TV. *IEEE Transactions on Broadcasting,* 2005, vol. 51, 191-199